# EUROPEAN PATENT APPLICATION

(11) **EP 4 836 332 A1**
(43) Date of publication of application: **04.11.2026**
(21) Application number: 24914775.2
(22) Date of filing: 17.07.2024
(51) Int. Cl.: H04L 1/1812

(54) **DATA TRANSMISSION METHOD AND APPARATUS, AND STORAGE MEDIUM AND ELECTRONIC APPARATUS**

(30) Priority: 02.01.2024 CN 202410008117
(71) Applicant: ZTE CORPORATION, Shenzhen, Guangdong 518057 (CN)
(72) Inventor: XUE, Yan, Shenzhen, Guangdong 518057 (CN); XIE, Feng, Shenzhen, Guangdong 518057 (CN); DUAN, Xiangyang, Shenzhen, Guangdong 518057 (CN); LIU, Hanchao, Shenzhen, Guangdong 518057 (CN)
(74) Representative: Cristinelli, Luca
(86) International application number: PCT/CN2024/106027
(87) International publication number: WO 2025/145553

(57) **Abstract**

Provided are a data transmission method and apparatus, a storage medium and an electronic apparatus. The method is applied to a first network element, and includes: acquiring configuration information between DRBs and HARQ entities, wherein the configuration information between DRBs and HARQ entities is used for configuring one HARQ entity for one DRB; configuring the HARQ entity to the DRB on the basis of the configuration information between DRBs and HARQ entities; and delivering data received by the HARQ entity to an upper layer via the DRB corresponding to the HARQ entity.

## Description

### Cross-Reference to Related Application

The present disclosure is based on Chinese patent application no. CN 202410008117.8 filed on 02 January, 2024 and entitled "Data Transmission Method and Apparatus, and Storage Medium and Electronic Apparatus", and claims priority to the Chinese patent application, the disclosure of which is incorporated herein by reference in its entirety.

### Technical Field

Embodiments of the present disclosure relate to the field of communications, and in particular, to a data transmission method and apparatus, a storage medium, and an electronic apparatus.

### Background

As wireless communication technology services become increasingly rich, the requirements for ensuring differentiated service performance are also becoming higher and higher.

Data transmission methods in the related art give insufficient consideration to the differentiation of service performance. Data flows with different QoS (Quality of Service) requirements are differentiated by being mapped to different DRBs (Data Radio Bearers) in SDAP (Service Data Adaptation Protocol) layer, but data from different DRBs are multiplexed together in MAC (Medium Access Control) layer, and then HARQ (Hybrid Automatic Repeat reQuest) is used to perform data transmission in physical layer. Such a data transmission mapping method is too rigid, making it difficult to ensure differentiated transmission of different data in physical layer.

### Summary

Embodiments of the present disclosure provide a data transmission method and apparatus, a storage medium, and an electronic apparatus, so as to at least solve the problem in the related art that differentiated data transmission cannot be performed in physical layer.

According to some embodiments of the present disclosure, provided is a data transmission method, which is applied to a first network element and includes: configuration information between data radio bearers (DRBs) and hybrid automatic repeat request (HARQ) entities is acquired, wherein the configuration information between DRBs and HARQ entities is used for configuring one HARQ entity for one DRB; the HARQ entity is configured to the DRB on the basis of the configuration information between DRBs and HARQ entities; and data received by the HARQ entity is delivered to an upper layer via the DRB corresponding to the HARQ entity.

According to some other embodiments of the present disclosure, further provided is a data transmission method, which is applied to a second network element and includes: configuration information between data radio bearers (DRBs) and hybrid automatic repeat request (HARQ) entities is acquired, wherein the configuration information between DRBs and HARQ entities is used for configuring one HARQ entity for one DRB; the HARQ entity is configured for the DRB on the basis of the configuration information between DRBs and HARQ entities; and a data flow is submitted via the DRB to the HARQ entity corresponding to the DRB for sending.

According to some other embodiments of the present disclosure, further provided is a data transmission method, which is applied to a third network element and includes: configuration information between data radio bearers (DRBs) and hybrid automatic repeat request (HARQ) entities is generated, wherein the configuration information between DRBs and HARQ entities is used for configuring one HARQ entity corresponding to one DRB; and the configuration information between DRBs and HARQ entities is sent.

According to some other embodiments of the present disclosure, provided is a data transmission apparatus, which is applied to a first network element and includes: a first acquisition module, configured to acquire configuration information between data radio bearers (DRBs) and hybrid automatic repeat request (HARQ) entities, wherein the configuration information between DRBs and HARQ entities is used for configuring one HARQ entity corresponding to one DRB; a first configuration module, configured to configure the HARQ entity to the DRB on the basis of the configuration information between DRBs and HARQ entities; and a first sending module, configured to deliver data received by the HARQ entity to an upper layer via the DRB corresponding to the HARQ entity.

According to some other embodiments of the present disclosure, provided is a data transmission apparatus, which is applied to a second network element and includes: a second acquisition module, configured to acquire configuration information between data radio bearers (DRBs) and hybrid automatic repeat request (HARQ) entities, wherein the configuration information between DRBs and HARQ entities is used for configuring one HARQ entity for one DRB; a second configuration module, configured to configure the HARQ entity for the DRB on the basis of the configuration information between DRBs and HARQ entities; and a second sending module, configured to submit a data flow via the DRB to the HARQ entity corresponding to the DRB for sending.

According to some other embodiments of the present disclosure, provided is a data transmission apparatus, which is applied to a third network element and includes: a first generation module, configured to generate configuration information between data radio bearers (DRBs) and hybrid automatic repeat request (HARQ) entities, wherein the configuration information between DRBs and HARQ entities is used for configuring one HARQ entity corresponding to one DRB; and a third sending component, configured to send the configuration information between DRBs and HARQ entities.

According to still some other embodiments of the present disclosure, a computer-readable storage medium is further provided, the computer-readable storage medium storing a computer program, wherein the computer program is configured to execute, when running, the steps in any one of the described method embodiments.

According to still some other embodiments of the present disclosure, further provided is an electronic apparatus, including a memory and a processor; wherein the memory stores a computer program, and the processor is configured to run the computer program to execute the steps in any one of the method embodiments.

### Brief Description of the Drawings

Fig. 1 is a schematic diagram of a transmission processing process of a data flow across different layers in the related art;
Fig. 2 is a schematic structural diagram of a downlink configured with CA in the related art;
Fig. 3 is a schematic structural diagram of an uplink configured with CA in the related art;
Fig. 4 is a schematic diagram of a data mapping method in the related art;
Fig. 5 is a hardware structural block diagram of a mobile terminal of a data transmission method according to embodiments of the present disclosure;
Fig. 6 is a flowchart I of a data transmission method according to embodiments of the present disclosure;
Fig. 7 is a schematic diagram I of an RRC message transmission method according to embodiments of the present disclosure;
Fig. 8 is a flowchart II of a data transmission method according to embodiments of the present disclosure;
Fig. 9 is a flowchart III of a data transmission method according to embodiments of the present disclosure;
Fig. 10 is a schematic diagram II of an RRC message transmission method according to embodiments of the present disclosure;
Fig. 11 is a flowchart IV of a data transmission method according to embodiments of the present disclosure;
Fig. 12 is a flowchart V of a data transmission method according to embodiments of the present disclosure;
Fig. 13 is a schematic diagram of a data configuration method according to embodiments of the present disclosure;
Fig. 14 is a structural block diagram I of a data transmission apparatus according to embodiments of the present disclosure;
Fig. 15 is a structural block diagram II of a data transmission apparatus according to embodiments of the present disclosure; and
Fig. 16 is a structural block diagram III of a data transmission apparatus according to embodiments of the present disclosure.

### Detailed Description of the Embodiments

Hereinafter, embodiments of the present disclosure are described in detail with reference to the accompanying drawings and in conjunction with the embodiments.

It is to be noted that the terms "first", "second", etc. in the description, claims and drawings of the present disclosure are used to distinguish similar objects, and are not necessarily used to describe a specific sequence or a precedence order.

First, related technologies involved in embodiments of the present disclosure are described:
With the development of wireless communication technology, services also become increasingly rich. Currently, three classic 5G scenarios exhibit distinctly different service characteristics: eMBB (Enhanced Mobile Broadband) services are characterized by high-speed data transmission with large packets and high throughput; URLLC (Ultra-reliable and Low Latency Communications) services demand low latency and high reliability; and mMTC (Massive Machine Type Communication) services focus on the transmission of small packets with low cost and low power consumption. In the future, multi-modal services that integrate multiple service types will emerge, such as immersive cloud XR (Extended Reality), multi-dimensional holography, autonomous driving, and industrial Internet, which has higher requirements on ensuring differentiated service performance.

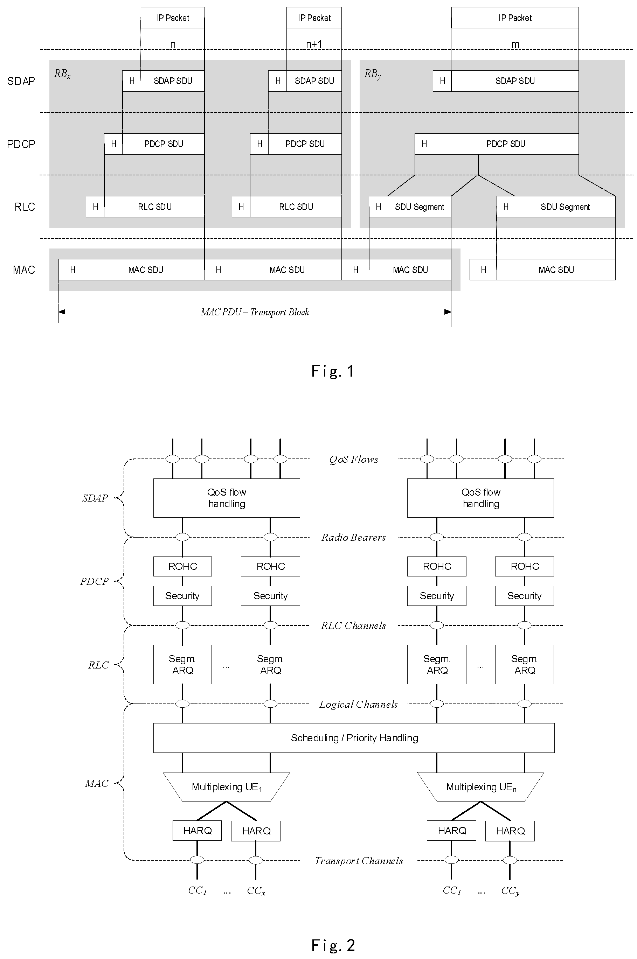

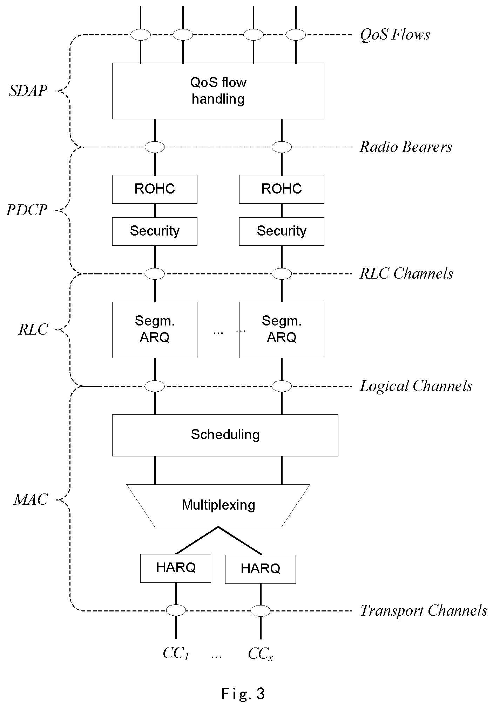

An RB (Radio Bearer) is a collective term of a series of protocol entities and configurations allocated by a base station for a UE (User Equipment), and includes a series of resources of each protocol entity. A 5G access network employs a DRB data mapping mode to provide service assurance, and a DRB serves as an actual channel for user data transmission. From the perspective of a service provided from lower layer to upper layer: physical layer provides a service to MAC sublayer by a transmission channel; the MAC sublayer provides the service to RLC (Radio Link Control) sublayer by logical channel; the RLC sublayer provides the service to PDCP (Packet Data Convergence Protocol) sublayer by RLC channels; and the PDCP sublayer provides the service to SDAP (Service Data Adaptation Protocol) sublayer by radio bearer (RB), and the SDAP layer provides the service to an upper layer by a QoS flow. From the perspective of data mapping from upper layers to lower layers: the SDAP layer is responsible for mapping QoS flow to DRB (data radio bearer), and QoS flows with different packet transfer requirements are mapped to different DRBs as a guarantee for distinguishing service differences; the PDCP layer is responsible for performing sequencing, header compression, encryption and integrity protection handling of upper-layer data; the RLC layer performs data segmentation and performs ARQ (Automatic Repeat reQuest) slow retransmission, a complete RLC SDU (Service Data Unit) may be segmented into multiple RLC PDU (Protocol Data Unit) segments, and the RLC layer may also perform re-segmentation according to actual resource conditions; and the MAC layer multiplexes a plurality of MAC SDUs into one MAC PDU as a physical transport block (TB), and uses HARQ mechanism to achieve quick retransmission of packets. There are a plurality of parallel HARQ processes under one HARQ entity, and data of different HARQ processes cannot be combined. TB is a basic unit of HARQ transmission. Without spatial multiplexing, one HARQ process may transmit one TB. When there is spatial multiplexing, one HARQ process can transmit at most two TBs. Fig. 1 is a schematic diagram of a transmission processing process of a data flow across different layers in the related art. As shown in Fig. 1, after multi-layer processing, data of RBx and RBy in a Radio Bearer (RB) are multiplexed into one MAC PDU in MAC layer and finally mapped into one TB. A 5G RAN (Radio Access Network) pays more attention to service provision based on full utilization of resources in data transmission processing, and has insufficient consideration on the difference of service performance experience. Data flows with different QoS requirements in SDAP layer are distinguished by being mapped to different DRBs, but data with different DRBs are multiplexed together in MAC layer. After data is multiplexed in MAC layer, the difference of services cannot be distinguished in the lower layer. The data transmission mapping method in the related art is too rigid, such that it is difficult to ensure service differentiation in the lower layer and improve performance, and it is difficult to meet the requirement of flexible assurance of service performance difference. Fig. 2 is a schematic structural diagram of a downlink configured with CA (Carrier Aggregation) in the related art, and Fig. 3 is a schematic structural diagram of an uplink configured with CA in the related art.

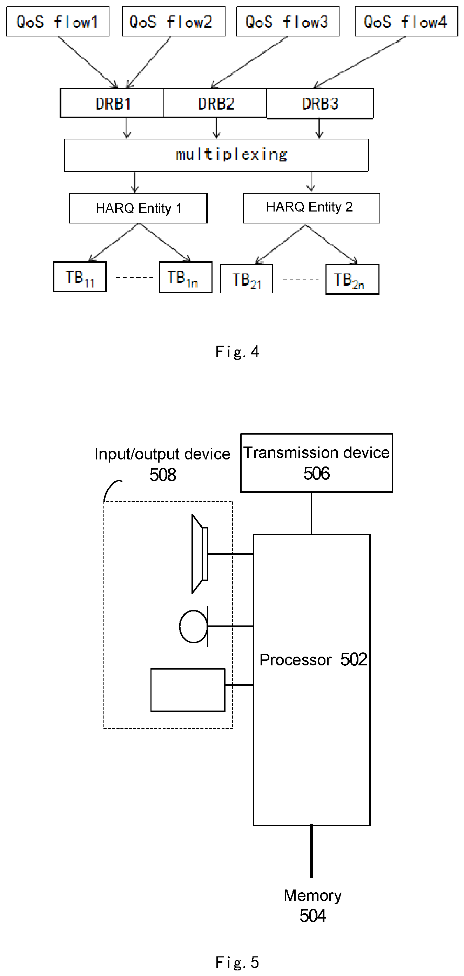

In a 5G (NR) wireless network, DRBs are used to carry user data transmissions. Multiple DRBs may be established simultaneously between a user and a base station node, and each DRB provides the same transfer processing for packets of the user. One or more QoS flows are mapped to one DRB. Since radio resources in a wireless communication network are limited, different DRB data is multiplexed in MAC layer after being processed by PDCP layer and RLC layer, and TB transmission on a plurality of HARQ processes is performed by an HARQ entity. Fig. 4 is a schematic diagram of a data mapping method in the related art. As shown in Fig. 4, in this data transmission method in which multiplexing is performed in MAC layer, data of DRB1 and data of DRB2 may be simultaneously mapped to and transmitted on the same TB of the same HARQ process of HARQ entity 1. Since TB is a basic unit of data scheduling transmission in physical layer, in this case, data of DRB1 and DRB2 cannot be transmitted differentially in physical layer as they are multiplexed on one TB.

In view of the described problems in the related art, embodiments of the present disclosure provide corresponding solutions. The present disclosure will be described below with reference to embodiments:
Method embodiments provided in the embodiments of the present disclosure can be executed in a mobile terminal, a computer terminal or a similar computing apparatus. Taking the method embodiments being executed on a mobile terminal as an example, Fig. 5 is a hardware structural block diagram of a mobile terminal of a data transmission method according to embodiments of the present disclosure. As shown in Fig. 5, the mobile terminal may include: one or more (Fig. 5 shows only one) processors 502 (the processors 502 may include, but not limited to processing apparatus such as a micro processor, MCU or a programmable logic device, FPGA); and a memory 504 for storing data; wherein the mobile terminal can further include a transmission device 506 and an input/output device 508 for communication functions. A person of ordinary skill in the art would understand that the structure as shown in Fig. 5 is merely exemplary, and does not limit the structure of the mobile terminal. For example, the mobile terminal may also include more or fewer assemblies than those shown in Fig. 5, or have different configuration from that shown in Fig. 5.

The memory 504 may be configured to store a computer program, for example, a software program and module of application software, such as a computer program corresponding to the data transmission method in the embodiments of the present disclosure; and the processor 502 executes all functional applications and data processing by running the computer program stored in the memory 504, i.e. implementing the described method. The memory 504 may include a high-speed random access memory, and may also include a non-transitory memory, such as one or more magnetic storage apparatuses, flash memories or other non-transitory solid-state memories. In some examples, the memory 504 may further include memories remotely arranged with respect to the processors 502, and these remote memories may be connected to the mobile terminal via a network. Examples of the network include, but are not limited to the Internet, an intranet, a local area network, a mobile communication network and combinations thereof.

The transmission apparatus 506 is configured to receive or send data via a network. Specific examples of the network may include a wireless network provided by a communication provider of the mobile terminal. In one example, the transmission apparatus 506 includes a network adapter (Network Interface Controller, NIC for short) which may be connected to other network devices by means of a base station, thereby being able to communicate with the Internet. In one example, the transmission device 506 may be a radio frequency (RF for short) module which is configured to communicate with the Internet in a wireless manner.

In the embodiments of the present disclosure, a network element may include one or more network nodes, one or more network functions, one or more network layers, one or more network devices, and/or one or more network entities; for example, the network element may be RAN Node, RRC (Radio Resource Control) layer of the RAN, MAC layer of the RAN, MAC entity of the RAN, Central Unit (CU), Distributed Unit (DU), UE or Integrated access and backhaul (IAB) Node. The RAN node may be base station device, such as a 4G base station eNodeB, a 5G base station gNodeB, or a next generation new base station. In embodiments of the present disclosure, the DRB may be at least one of: communication related radio bearer, sensing related radio bearer, AI (Artificial Intelligence) related radio bearer, data service related radio bearer, calculation related radio bearer, security/trust related radio bearer.

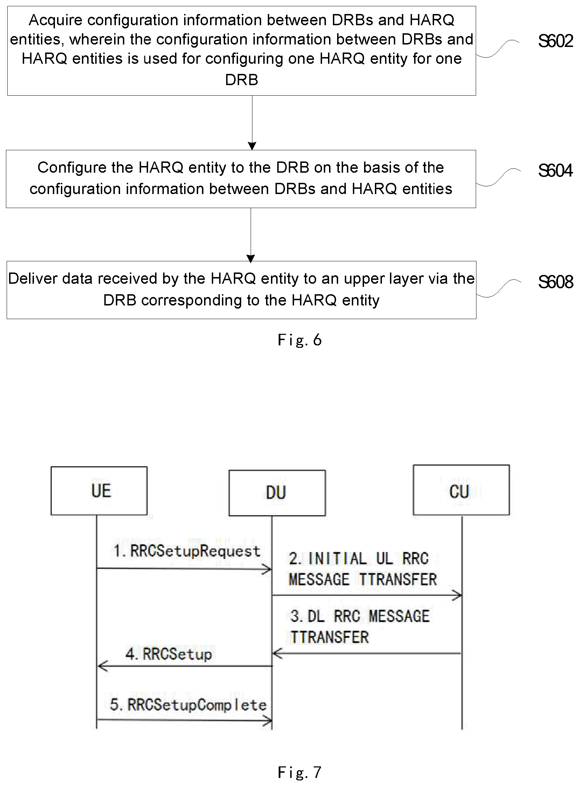

The present embodiment provides a data transmission method. Fig. 6 is a flowchart I of a data transmission method according to embodiments of the present disclosure. As shown in Fig. 6, the flow includes the following steps:
step S602: a first network element acquires configuration information between data radio bearers (DRBs) and hybrid automatic repeat request (HARQ) entities, wherein the configuration information between DRBs and HARQ entities is used for configuring one HARQ entity for one DRB;
step S604: the first network element configures the HARQ entity to the DRB on the basis of the configuration information between DRBs and HARQ entities; and
step S606: the first network element delivers data received by the HARQ entity to an upper layer via the DRB corresponding to the HARQ entity.

In the steps above, the first network element includes but is not limited to: RAN,UE, CU, DU, relay node or IAB node. The configuration information between DRBs and HARQ entities may contain information of one-to-one configuration of multiple groups of DRBs and HARQ entities; for example, the configuration information between DRBs and HARQ entities contains information of one-to-one configuration of two groups of DRBs and HARQ entities: one group includes a first DRB and a first HARQ entity, indicating that the first HARQ entity is configured for the first DRB; and the other group includes a second DRB and a second HARQ entity, indicating that the second HARQ entity is configured for the second DRB. The first HARQ entity and the second HARQ entity are different HARQ entities, the first DRB and the second DRB are different DRBs, the first DRB and the first HARQ entity are configured on a one-to-one basis, and the second HARQ entity and the second DRB are configured on a one-to-one basis. According to one-to-one configuration information between the multiple groups of DRBs and HARQ entities, the first network element delivers data received by the HARQ entity included in each group to an upper layer via the DRB configured in one-to-one correspondence with the HARQ entity, for example, delivers data received by the first HARQ entity to the upper layer via the first DRB, and delivers data received by the second HARQ entity to the upper layer via the second DRB.

By the steps above, one HARQ entity is configured for each DRB on the basis of the configuration information between DRBs and HARQ entities, such that data requiring differentiated transmission may be separately transmitted in physical layer and independently delivered to the upper layer at a receiving terminal, thereby ensuring the differentiation in service performance, effectively solving the problem in the related art that differentiated data transmission cannot be performed in physical layer, achieving the effect of improving the flexibility of data transmission in physical layer, flexibly meeting the transmission requirements of different services in lower layer, and significantly enhancing both service transmission capabilities and service performance experience.

In some optional embodiments, the configuration information between DRBs and HARQ entities includes at least one of: a DRB identity of the DRB, an HARQ entity identity of the HARQ entity, and a group identity configured for the DRB and the HARQ entity.

In some optional embodiments, the first network element configures one HARQ entity for one DRB on the basis of the configuration information between DRBs and HARQ entities may be: the HARQ entity uses a lifecycle same as the DRB. For example, when the DRB is established, the HARQ entity is generated correspondingly, and when the DRB is removed, the HARQ entity is also deleted correspondingly.

In some optional embodiments, the first network element configures one HARQ entity for one DRB on the basis of the configuration information between DRBs and HARQ entities may be: configuring one HARQ entity for one DRB may be in data transmission involving a plurality of DRBs, the HARQ entity delivers data to an upper layer only via the DRBs.

In some optional embodiments, the first network element configures one HARQ entity for one DRB on the basis of the configuration information between DRBs and HARQ entities may be: configuring one HARQ entity for one DRB may be in data transmission involving are a plurality of DRBs, the HARQ entity is only bound to, corresponds to or is associated with the DRBs.

In some optional embodiments, the first network element configures one HARQ entity for one DRB on the basis of the configuration information between DRBs and HARQ entities may be: configuration of the DRB includes configuration of the HARQ entity. For example, configuration parameters of the DRB include parameter configuration of the HARQ entity.

In some optional embodiments, the first network element configures one HARQ entity for one DRB on the basis of the configuration information between DRBs and HARQ entities may be: configuration of the DRB includes an HARQ entity identity of the HARQ entity. For example, a configuration message configured for the DRB includes an identity of the HARQ entity (e.g. HARQ entity Identity).

In some optional embodiments, the first network element acquires configuration information between DRBs and HARQ entities includes at least one of: the first network element generates configuration information between DRBs and HARQ entities; the first network element receives a first configuration message including the configuration information between DRBs and HARQ entities; and the first network element first sends a first request message, and then receives a first configuration message including the configuration information between DRBs and HARQ entities, wherein the first request message is used for requesting a second network element to send the first configuration message including the configuration information between DRBs and HARQ entities, and the second network element is a network element which sends data to the first network element according to the configuration information between DRBs and HARQ entities.

In some optional embodiments, after the first network element acquires configuration information between DRBs and HARQ entities, the method further includes: a second configuration message including the configuration information between DRBs and HARQ entities is sent to a second network element, such that the second network element sends data to the first network element according to the configuration information between DRBs and HARQ entities.

In some optional embodiments, the method that the first network element receives a first configuration message including the configuration information between DRBs and HARQ entities includes at least one of: the first network element receives the first configuration message from the second network element, wherein the second network element is a network element which sends data to the first network element according to the configuration information between DRBs and HARQ entities; the first network element receives the first configuration message from a third network element, wherein the third network element is a network element which does not directly send data to the first network element according to the configuration information between DRBs and HARQ entities; and the first network element receives the first configuration message from the third network element via the second network element, wherein the third network element is a network element which does not directly send data to the first network element according to the configuration information between DRBs and HARQ entities, and the second network element is a network element which directly sends data to the first network element according to the configuration information between DRBs and HARQ entities.

In the described steps, the first network element receives the configuration message from the second network element includes but is not limited to: in cases where the first network element is a UE and the second network element is a base station, downlink transmission is performed between the second network element and the first network element, and the configuration message is an RRC message sent by the base station, such as an RRC connection setup message or an RRC reconfiguration message. In cases where the first network element is a base station and the second network element is a UE, uplink transmission is performed between the second network element and the first network element, wherein the base station itself can send the RRC message, thus the base station itself knows the configuration relationship, and therefore the base station can deliver, according to the configuration information in the RRC message previously sent to the UE, data received on the HARQ entity to an upper layer via the DRB corresponding to configuration of the HARQ entity. For example, the UE receives an RRC reconfiguration message sent by the base station, the RRC reconfiguration message includes one DRB and an HARQ entity corresponding to the DRB, and the UE delivers all data on the HARQ entity to an upper layer via the DRB according to the RRC reconfiguration message. Optionally, setup of the DRB and generation of the HARQ entity are performed at the UE side according to the RRC reconfiguration message.

In the described steps, the first network element receives the configuration message from the third network element, includes but is not limited to: in cases where the first network element is a UE and the third network element is a base station only sending the configuration message (without user plane data transmission), target control signaling comes from an RRC message from the base station, such as an RRC connection setup message and an RRC reconfiguration message, and the second network element is a base station (without control signaling) only performing data transmission. In this case, the first network element may configure a received configuration relationship between DRBs and HARQ entities of data of the second network element according to the RRC message from the third network element, and deliver the data to an upper layer on the basis of the configured configuration relationship.

In the described steps, the first network element receives the configuration message from the third network element via the second network element, includes but is not limited to: when the first network element is a UE, the second network element is a DU (which can directly interact with the UE for control signaling messages and data transmission messages), and the third network element is a CU, since the CU and the UE do not directly interact with each other, an RRC message generated by the CU needs to be sent to the UE via the DU.

In some optional embodiments, the first configuration message includes at least one of: an RRC message and a DRB configuration message.

In some optional embodiments, the second configuration message includes at least one of: an RRC message and a DRB configuration message.

In some optional embodiments, the RRC message includes at least one of: an RRC connection message, an RRC setup message, an RRC configuration message, an RRC reconfiguration message, an RRC transfer message, an RRC recovery message, and an RRC request response message.

In some optional embodiments, the first request message includes at least one of: an RRC request message and a radio bearer configuration request message.

In the described embodiment, the configuration message may also be a DRB configuration message included in an RRC message. A request message of the configuration information may also be a DRB configuration request message included in the RRC request message. Hereinafter, the first network element being a UE is taken as an example for illustration: the RRC message, i.e. radio resource control message, is a control signaling message exchanged between the base station and the UE, and the RRC message is generated by RRC layer of the base station in a current 4G/5G system. The RRC setup message is used for setup of an RRC connection when the UE is in a non-connected state (for example, the UE is in an RRC idle state, i.e. RRC_IDLE), and the RRC setup message includes an RRC setup request message (e.g. RRCSetupRequest message and RRCReestablishmentRequest message) sent by the UE to the base station and an RRC setup message (e.g. an RRCSetup message) sent by the base station to the UE. The UE sends one RRC setup complete message (e.g. RRCSetupComplete message) after setup of the RRC connection. The UE can use the RRC setup request message to send a request for the configuration information between DRBs and HARQ entities (corresponding to the request message of the configuration information mentioned in the present disclosure); and the base station can use the RRC setup message to send one-to-one configuration information between DRBs and HARQ entities (i.e. the described configuration information between DRBs and HARQ entities) to instruct the UE to perform radio bearer configuration. Optionally, the UE may also use the RRC setup complete message to send the configuration information between DRBs and HARQ entities. The RRC reconfiguration message (RRCReconfiguration message) is used for configuring an RRC connection when the UE is in a connected state (e.g. RRC_CONNECTED), and the UE receives the RRC reconfiguration message (e.g. RRCReconfiguration message) and executes radio bearer configuration according to radio bearer configuration information contained in the RRCReconfiguration message. In the embodiments of the present disclosure, the base station can send to the UE the configuration information between DRBs and HARQ entities included in the RRC reconfiguration message; and upon receiving the RRC reconfiguration message including the configuration information between DRBs and HARQ entities, the UE performs radio bearer configuration according to the configuration information. In addition, in scenarios where a CU (Central Unit) and a DU (Distributed Unit) are separately deployed, after the UE sends an RRC connection setup request, the DU sends to the CU a transfer message (e.g. Initial UL RRC Message Transfer) of a UE RRC setup request message, so as to transfer an initial uplink RRC message from the DU to a CU control plane (CU-CP). The CU allocates radio resources for the UE by sending a transfer message of a downlink RRC message (DL RRC Message Transfer) to the DU. Fig. 7 is a schematic diagram I of an RRC message transmission method according to embodiments of the present disclosure. As shown in Fig. 7, the DU plays the role of RRC message transfer between the CU and the UE. In the present disclosure, the CU may configure an RRC message containing configuration information between DRBs and HARQ entities, and transfer same to the UE via the DU. The UE may also send to the CU an RRC message containing a request of the configuration information between DRBs and HARQ entities via the DU.

In some optional embodiments, the UE receives an RRC reconfiguration message, and an RRC reconfiguration message IE (Information Element) carries the configuration information between DRBs and HARQ entities. For example, the configuration information between DRBs and HARQ entities is carried in a radio bearer configuration IE. For example, the configuration information between DRBs and HARQ entities is carried in an MAC configuration IE. For example, the configuration information between DRBs and HARQ entities is carried in an RLC configuration IE. For example, the configuration information between DRBs and HARQ entities is carried in a PDCP configuration IE. For example, the UE receives a RadioBearerConfig IE carrying the configuration information between DRBs and HARQ entities, and configures one HARQ entity for one DRB on the UE side according to the configuration information between DRBs and HARQ entities. For example, the UE receives an RLC-BearerConfig IE carrying the configuration information between DRBs and HARQ entities, and configures the HARQ entity by the DRB on the UE side according to the configuration information between DRBs and HARQ entities.

In some optional embodiments, the UE receives a radio bearer configuration message, and the radio bearer configuration message carries the configuration information between DRBs and HARQ entities. Optionally, the configuration information may be used to generate one HARQ entity for the DRB during setup of the DRB. Optionally, when the DRB is removed, the configuration information may be used to delete the HARQ entity corresponding to the DRB. Optionally, when the DRB is modified, the configuration information may be used to modify the HARQ entity corresponding to the DRB.

In some optional embodiments, the second network element includes at least one of: an RAN, a UE, a CU, a DU, a relay node and an IAB node.

In some optional embodiments, the third network element includes at least one of: an RAN, a UE, a CU, a DU, a relay node and an IAB node.

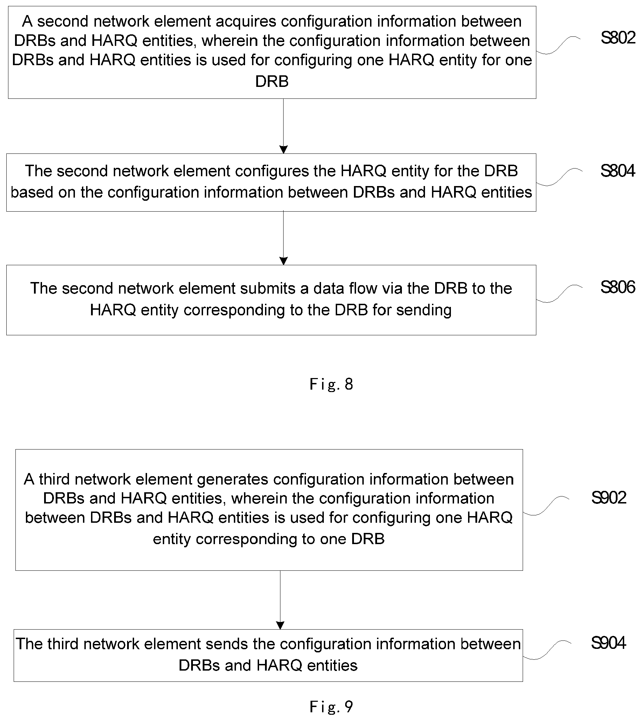

Fig. 8 is a flowchart II of a data transmission method according to embodiments of the present disclosure. As shown in Fig. 8, the flow includes the following steps:
step S802: a second network element acquires configuration information between DRBs and HARQ entities, wherein the configuration information between DRBs and HARQ entities is used for configuring one HARQ entity for one DRB, the configuration information may contain one DRB identity and one HARQ entity identity, or the configuration information may contain multiple groups of DRB identities and HARQ entity identities, wherein each group contains one DRB identity and one HARQ entity identity;
step S804: the second network element configures the HARQ entity for the DRB on the basis of the configuration information between DRBs and HARQ entities; and
step S806: the second network element submits a data flow via the DRB to the HARQ entity corresponding to the DRB for sending.

In step S804, when configuring the HARQ entity for the DRB, the second network element explicitly indicates how to configure between each DRB and each HARQ entity, for example, there are two groups of configuration information: DRB1 (DRB ID=1) and HARQ entity 1 (HARQ entity ID=1), and DRB2 (DRB ID=2) and HARQ entity 2 (HARQ entity ID=2) are configured, and data flow1 and data flow2 are data of different service characteristics. When sending a data flow, according to a configured configuration relationship, the second network element sends the data flow1 to a sending terminal HARQ entity 1 via DRB1 for transmission and sends the data flow2 to a sending terminal HARQ entity 2 via DRB2 for transmission; and in MAC layer, data of the HARQ entity is placed in an HARQ process of the HARQ entity for physical layer transmission in a TB manner. Multiple parallel HARQ processes in each HARQ entity support TB transmission under the same DRB. However, since different HARQ entities correspond to different TBs and different HARQ entities correspond to data flows of different service domain characteristics and different DRBs, the situation that data of different DRBs is multiplexed to transmit on the same TB will not occur.

By the described steps, one-to-one configuration between DRBs and HARQ entities can be configured on the basis of the configuration information between DRBs and HARQ entities, so as to finely distinguish and respectively independently configure data of varying service characteristic requirements, such that data requiring differentiated transmission may be separately transmitted in physical layer, thereby ensuring the differentiation in service performance, effectively solving the problem in data transmission methods in the related art that differentiated data transmission cannot be performed in physical layer when data of different DRBs are multiplexed together in MAC layer, achieving the effects of improving the flexibility of data transmission in physical layer, flexibly meeting the transmission requirements of different services in lower layer, and significantly enhancing both service transmission capabilities and service performance experience.

In some optional embodiments, the configuration information between DRBs and HARQ entities includes at least one of: a DRB identity of the DRB, an HARQ entity identity of the HARQ entity, and a group identity configured for the DRB and the HARQ entity. For example, the DRB Identify and the HARQ entity Identify are included in the RadioBearerConfig IE. For example, the RadioBearerConfig IE includes information of Group ID, DRB Identity and HARQ entity Identify, which indicates the HARQ entity Identify configured for each DRB Identity in a group having the Group ID.

In some optional embodiments, the second network element configures one HARQ entity for one DRB on the basis of the configuration information between DRBs and HARQ entities may be: the HARQ entity uses a lifecycle same as the DRB. For example, when the DRB is established, the HARQ entity is generated correspondingly, and when the DRB is removed, the HARQ entity is also deleted correspondingly.

In some optional embodiments, the second network element configures one HARQ entity for one DRB on the basis of the configuration information between DRBs and HARQ entities may be: configuring one HARQ entity for one DRB may be in data transmission involving a plurality of DRBs, the HARQ entity delivers data to an upper layer only via the DRBs.

In some optional embodiments, the second network element configures one HARQ entity for one DRB on the basis of the configuration information between DRBs and HARQ entities may be: configuring one HARQ entity for one DRB may be in data transmission involving are a plurality of DRBs, the HARQ entity is only bound to, corresponds to or is associated with the DRBs.

In some optional embodiments, the second network element configures one HARQ entity for one DRB on the basis of the configuration information between DRBs and HARQ entities may be: configuration of the DRB includes configuration of the HARQ entity. For example, configuration parameters of the DRB include parameter configuration of the HARQ entity.

In some optional embodiments, the second network element configures one HARQ entity for one DRB on the basis of the configuration information between DRBs and HARQ entities may be: configuration of the DRB includes an HARQ entity identity of the HARQ entity. For example, a configuration message configured for the DRB includes an identity of the HARQ entity (HARQ entity ID).

In some optional embodiments, the second network element acquires configuration information between DRBs and HARQ entities includes at least one of: the second network element generates configuration information between DRBs and HARQ entities; the second network element receives a third configuration message including the configuration information between DRBs and HARQ entities; and the second network element first sends a second request message, and then receives a third configuration message including the configuration information between DRBs and HARQ entities, wherein the second request message is used for requesting a first network element to send the third configuration message including the configuration information between DRBs and HARQ entities.

In some optional embodiments, the second network element receives a third configuration message including the configuration information between DRBs and HARQ entities includes at least one of: the second network element receives the third configuration message from the first network element, wherein the first network element is a network element which receives data from the second network element according to the configuration information between DRBs and HARQ entities; the second network element receives the third configuration message from the third network element, wherein the third network element is a network element which does not directly receive data from the second network element according to the configuration information between DRBs and HARQ entities; and the second network element receives the third configuration message from the third network element via the first network element, wherein the third network element is a network element which does not directly send data to the first network element according to the configuration information between DRBs and HARQ entities, and the first network element is a network element which directly sends data to the second network element according to the configuration information between DRBs and HARQ entities.

In some optional embodiments, the method further includes: the second network element sends a fourth configuration message including the configuration information between DRBs and HARQ entities to the first network element, such that the first network element receives data according to the configuration information between DRBs and HARQ entities, wherein the first network element is a network element which receives data from the second network element according to the configuration information between DRBs and HARQ entities.

In some optional embodiments, before the second network element sends the fourth configuration message including the configuration information between DRBs and HARQ entities to the first network element, the method further includes: the second network element receives the third request message which is sent by the first network element and is used for requesting the configuration information between DRBs and HARQ entities. For example, the UE first sends to the base station a request message of the configuration information between DRBs and HARQ entities (for example, the request message of the configuration information is an RRC request message), and upon receiving the request message, the base station sends to the UE the configuration message of the configuration information between DRBs and HARQ entities (for example, the configuration message is an RRC reconfiguration message).

In some optional embodiments, the third configuration message includes at least one of: an RRC message and a radio bearer configuration message.

In some optional embodiments, the fourth configuration message includes at least one of: an RRC message and a radio bearer configuration message.

In some optional embodiments, the RRC message includes at least one of: an RRC connection message, an RRC setup message, an RRC configuration message, an RRC reconfiguration message, an RRC transfer message, and an RRC request response message.

In some optional embodiments, the second request message includes at least one of: an RRC request message, a radio bearer configuration request message.

In some optional embodiments, the third request message includes at least one of: an RRC request message, a radio bearer configuration request message.

In some optional embodiments, a data flow is submitted via the DRB to the HARQ entity corresponding to the DRB for sending, includes: the second network element sends the data flow according to service characteristics of the data flow that needs to be sent, wherein data flows with different service characteristics are submitted via different DRBs to corresponding HARQ entities configured by the DRBs, for sending.

In the described steps, specific DRBs may be configured for data flows having specific service characteristics, and the configuration method includes but is not limited to: data flows with the same service characteristic information are configured to the same DRB, and data flows with different service characteristic information are configured to different DRBs, e.g. dataflow1, dataflow2, dataflow3 and dataflow4, and the service characteristic information of these four data flows is the packets with in-order requirement, the packets without in-order requirement, the packets with high-reliability transmission requirement, and the packets with low-reliability requirement. The second network element may configure the data flow dataflow1 with in-order requirement to DRB1, configure the data flow dataflow2 without in-order requirement to DRB2, the data flow dataflow3 with high-reliability requirement to DRB3, and the data flow dataflow4 with low-reliability requirement to DRB4.

In some optional embodiments, the service characteristics include at least one of: an in-order packet transmission service indication, an out-of-order packet transmission service indication, a high-reliability transmission service indication, a low-reliability transmission service indication, a low-latency transmission service indication, a non-low-latency transmission service indication, a service type indication, a service ID, and a service name identity.

In some optional embodiments, the method further includes: the second network element acquires the service characteristics via at least one of: receiving service characteristic information from a core network, parsing NAS signaling to acquire service characteristic information, parsing QoS parameter information to acquire service characteristic information, parsing service characteristic information delivered in-band in a data flow to acquire service characteristic information, acquiring service characteristic information via a DPI (Deep Packet Inspection) deep packet parsing, acquiring service characteristic information via AI (Artificial Intelligence) reasoning, and acquiring service characteristic information via big data analysis.

In the described embodiments, the first network element includes but is not limited to at least one of: an RAN, a UE, a CU, a DU, a relay node and an IAB node; and optionally, the second network element includes but is not limited to at least one of: an RAN, a UE, a CU, a DU, a relay node and an IAB node. In cases where the first network element is a UE and the second network element is a base station, downlink transmission is performed between the second network element and the first network element. In this case, the base station transmits configuration information (i.e. the configuration information between DRBs and HARQ entities) and downlink data to the UE, the downlink data can be sent out via the HARQ entity bound to the DRB (i.e. one-to-one configuration); and upon receiving the configuration information, the UE can learn how to use the HARQ entity and the DRB to receive data and deliver the data to an upper layer.

In some optional embodiments, the third network element includes at least one of: an RAN, a UE, a CU, a DU, a relay node and an IAB node.

Hereinafter, processing operations on each network element side are illustrated by taking the second network element being a base station and the first network element being a UE as an example.

Specific embodiment I: data transmission process at a base station side during downlink transmission

When the base station sends data to the UE, the base station configures an HARQ entity for a DRB according to configuration information between DRBs and HARQ entities, and sends the data according to the configuration information. The base station also notifies the UE of the configuration information between DRBs and HARQ entities via an RRC message (such as an RRC connection setup message and an RRC reconfiguration message).

For example, specific steps during downlink transmission when the base station side is taken as a transmitting terminal are as follows:
step I: the base station maps data flows with different service characteristic information to different DRBs.
   For example, there are four data flows, i.e. dataflow1, dataflow2, dataflow3 and dataflow4, and the service characteristic information of these four data flows is the packets with in-order requirement, the packets without in-order requirement, the packets with high-reliability transmission requirement, and the packets with low-reliability requirement. The base station maps the data flow dataflow1 with in-order requirement to DRB1, maps the data flow dataflow2 without in-order requirement to DRB2, maps the data flow dataflow3 with high-reliability requirement to DRB3, and maps the data flow dataflow4 with low-reliability requirement to DRB4.
Step II: the base station sends the configuration information between DRBs and HARQ entities to the UE via an RRC message.
   When configuring the DRB and the HARQ entity, the base station explicitly indicates how to configure each DRB and each HARQ entity. For example, DRB1 and HARQ entity 1 are configured, and DRB2 and HARQ entity 2 are configured. The base station sends the configuration information to the UE via an RRC connection setup message or an RRC reconfiguration message, such that the UE learns how to configure the DRB and the HARQ entity.
Step III: the base station configures a corresponding HARQ entity for each DRB of the base station terminal according to the configuration information between DRBs and HARQ entities, and submits, via the DRB, data to be sent to the HARQ entity for sending.

When sending data, the base station may send, according to the configuration information, data flow1 to a sending terminal HARQ entity 1 via DRB1 for transmission, and send data flow2 to a sending terminal HARQ entity 2 via DRB2 for transmission. MAC layer entity transmits the data configured to the HARQ entity in physical layer in a TB manner. There are a plurality of parallel HARQ processes in each HARQ entity. Different HARQ entities correspond to data flows of different service domain characteristics and different DRBs, and data of different data flows is not configured to the same HARQ entity, thereby avoiding the situation that different data flows are configured to the same TB in physical layer transmission. Since data of different services can be distinguished in physical layer, different physical layer transmission means can be adopted for different service data. For example, an MCS level is reduced for TB transmission of high-reliability data flows, and the transmit power is increased on the time slot in which the high-reliability data flows are transmitted.

Hence, in this embodiment, data flows with different service characteristic requirements may be mapped to different DRBs via classification, then different DRBs are configured to different HARQ entities to implement association between services and HARQ entities, and finally different data flows are distinguished on TBs via the HARQ entities. By the present embodiment, differentiated transmission of service data is achieved, especially in physical link transmission, clear distinguishing and personalizing of service differentiation are ensured.

### Specific embodiment II: data transmission process at a UE side during downlink transmission

When a base station sends data to the UE, the base station configures a DRB and an HARQ entity and notifies the UE of the related configuration information between DRBs and HARQ entities via an RRC message (e.g. an RRC connection setup message and an RRC reconfiguration message). Upon receiving the configuration information, the UE may learn which DRB the HARQ entity configuration corresponds to. The UE delivers downlink data received by the HARQ entity to an upper layer via the DRB corresponding to the HARQ entity configuration.

For example, specific steps during downlink transmission when the UE is taken as a receiving terminal are as follows:
Step I (it should be noted that this step is an optional step, and in practical applications, step I may also be skipped to directly execute the subsequent steps): the UE sends a request message, wherein the request message carries a request for configuration information between DRBs and HARQ entities.
   The request message sent by the UE may be an RRC Setup Request message or an RRC configuration request message.
Step II: the UE receives a message containing the configuration information between DRBs and HARQ entities.
   By receiving the configuration information including the DRB and the HARQ entity, the UE can learn which DRB each HARQ entity corresponds to, and further delivers downlink data to an upper layer via a corresponding DRB configured by the HARQ entity. The base station puts the configuration information between DRBs and HARQ entities in an RRC connection setup message (RRC Setup message) or an RRC reconfiguration message and sends same to the UE, and the UE acquires the configuration information by receiving the RRC message.
Step III: the UE delivers data received by the HARQ entity to an upper layer via the DRB according to the configuration information between said DRB and HARQ entity in the configuration information between DRBs and HARQ entities.

The configuration information between DRBs and HARQ entities may include configuration information between multiple groups of DRBs and HARQ entities, for example, a first DRB is configured with a first HARQ entity, and a second DRB is configured with a second HARQ entity. According to one-to-one configuration information between the multiple groups of DRBs and HARQ entities, the UE delivers data received by the first HARQ entity to the upper layer via the first DRB, and delivers data received by the second HARQ entity to the upper layer via the second DRB; and the first HARQ entity and the second HARQ entity are different HARQ entities, and the first DRB and the second DRB are different DRBs.

Hence, by receiving the configuration information between DRBs and HARQ entities, the UE can learn how to independently deliver the received data to the upper layer.

### Specific embodiment III: data configuration process at a UE side during uplink transmission

When the UE sends data to a base station, the UE first receives configuration information between DRBs and HARQ entities, and then sends the data according to the configuration information between DRBs and HARQ entities. Before the UE sends the data, the base station notifies the UE of the configuration information between DRBs and HARQ entities via an RRC message (such as an RRC connection setup message and an RRC reconfiguration message) to help the UE to send the data according to the configuration information. Optionally, the UE first sends a request for the configuration information between DRBs and HARQ entities, and then the base station sends the configuration information between DRBs and HARQ entities to the UE.

For example, specific steps during uplink transmission when the UE side is taken as a transmitting terminal are as follows:
step I: the UE sends an RRC request message for configuration information between DRBs and HARQ entities, for example, the UE requests to configure HARQ entities for DRBs of four uplink data flows.
Step II: the UE receives an RRC configuration message including the configuration information between DRBs and HARQ entities sent from the base station. The RRC configuration message may be an RRC reconfiguration message or an RRC request response message. The configuration information between DRBs and HARQ entities sent by the base station indicates a configuration relationship between one to multiple groups of DRBs and HARQ entities, for example, there are configuration relationships between four groups of DRBs and HARQ entities: an HARQ entity 1 is configured for DRB1, an HARQ entity 2 is configured for DRB2, an HARQ entity 3 is configured for DRB3, and an HARQ entity 4 is configured for DRB4. Optionally, step II may also be: the UE receives configuration information between DRBs and HARQ entities of downlink data sent by the base station, and takes the configuration information between DRBs and HARQ entities of the downlink data as configuration information between DRBs and HARQ entities sent by uplink data of the UE.
Step III: the UE maps data flows with different service characteristic information to different DRBs.
   For example, there are four data flows, i.e. dataflow1, dataflow2, dataflow3 and dataflow4, and the service characteristic information of these four data flows is the packets with in-order requirement, the packets without in-order requirement, the packets with high-reliability transmission requirement, and the packets with low-reliability requirement. According to an indication of a mapping relationship by the base station, the UE maps the data flow dataflow1 with in-order requirement to DRB1, and maps the data flow dataflow2 without in-order requirement to DRB2, maps the data flow dataflow3 with high-reliability requirement to DRB3, and maps the data flow dataflow4 with low-reliability requirement to DRB4.
Step IV: according to a configuration relationship between each DRB and an HARQ entity corresponding thereto, the UE submits, via the DRB, data to be sent to the HARQ entity for sending.

Since data of different services can be distinguished in physical layer of the transmitting terminal, different physical layer transmission means can be adopted for different service data. For example, an MCS level is reduced for TB transmission of high-reliability data flows, and the transmit power is increased on the time slot in which the high-reliability data flows are transmitted. For example, a dedicated DRB is established for a data flow transmitted at a high speed, and a dedicated HARQ entity is configured, such that targeted measures such as dedicated optimization and dedicated hardware handling can be adopted to ensure high-speed data transmission.

Hence, in this embodiment, data flows with different service characteristic requirements may be mapped to different DRBs via classification, then different DRBs are configured to different HARQ entities to implement association between services and HARQ entities. Since different HARQ entities have different TBs, the HARQ entities can ensure that different data flows are distinguished in the physical layer. By the present embodiment, differentiated transmission of service data is achieved, especially in physical link transmission, clear distinguishing and personalizing of service differentiation are ensured.

Specific embodiment IV: data transmission process at a base station side during uplink transmission

When the base station receives data sent from a UE, the base station configures one HARQ entity for each DRB, and receives the data according to the configuration. Before the base station receives the data, the base station notifies the UE of the configuration information between DRBs and HARQ entities via an RRC message (such as an RRC connection setup message and an RRC reconfiguration message) to help the UE to send the data according to the configuration information. Optionally, the UE first sends a request for the configuration information between DRBs and HARQ entities, and then the base station sends the configuration information between DRBs and HARQ entities to the UE.

For example, specific steps during uplink transmission when the base station side is taken as a receiving terminal are as follows:
step I: the base station receives an RRC request message for configuration information between DRBs and HARQ entities sent by a UE, for example, the UE requests to configure HARQ entities for DRBs of four uplink data flows.
Step II: the base station sends to the UE an RRC configuration message including the configuration information between DRBs and HARQ entities. The RRC configuration message may be an RRC reconfiguration message or an RRC request response message. The configuration information between DRBs and HARQ entities sent by the base station indicates a configuration relationship between one to multiple groups of DRBs and HARQ entities, for example, there are configuration relationships between four groups of DRBs and HARQ entities: an HARQ entity 1 is configured for DRB1, an HARQ entity 2 is configured for DRB2, an HARQ entity 3 is configured for DRB3, and an HARQ entity 4 is configured for DRB4.
Step III: the base station configures an HARQ entity for a DRB of the base station side according to the sent RRC message including the configuration information between DRBs and HARQ entities.
Step IV: on the basis of the configuration information between DRBs and HARQ entities, the base station delivers data received by each HARQ entity to an upper layer via a corresponding DRB configured by each HARQ entity.

Data of different services can be distinguished in the physical layer of the receiving terminal, and the received data can be independently delivered to upper layers on a service basis. By the present embodiment, differentiated transmission of service data is achieved, especially in physical link transmission, clear distinguishing and personalizing of service differentiation are ensured.

Fig. 9 is a flowchart III of a data transmission method according to embodiments of the present disclosure. As shown in Fig. 9, the flow includes the following steps:
step S902: a third network element generates configuration information between data radio bearers (DRBs) and hybrid automatic repeat request (HARQ) entities, wherein the configuration information between DRBs and HARQ entities is used for configuring one HARQ entity corresponding to one DRB; and
step S904: the third network element sends the configuration information between DRBs and HARQ entities.

By the steps above, a corresponding HARQ entity is configured for each DRB on the basis of the configuration information between DRBs and HARQ entities, such that data requiring differentiated transmission may be separately transmitted in the physical layer, thereby ensuring the differentiation in service performance, effectively solving the problem in data transmission methods in the related art that differentiated data transmission cannot be performed in a physical layer when data of different DRBs are multiplexed together in the MAC layer, achieving the effects of improving the flexibility of data transmission in the physical layer, flexibly meeting the transmission requirements of different services in lower layer, and significantly enhancing both service transmission capabilities and service performance experience.

In some optional embodiments, the configuration information between DRBs and HARQ entities includes at least one of: a DRB identity of the DRB, an HARQ entity identity of the HARQ entity, and a group identity configured for the DRB and the HARQ entity.

In some optional embodiments, the third network element sends the configuration information between DRBs and HARQ entities includes at least one of: the third network element directly sends the configuration information between DRBs and HARQ entities to a first network element, such that when receiving data, the first network element delivers data received by the HARQ entity to an upper layer via the DRB corresponding to the HARQ entity; the third network element directly sends the configuration information between DRBs and HARQ entities to a second network element, such that when sending data, the second network element submits data from the DRB to the HARQ entity for sending; the third network element sends the configuration information between DRBs and HARQ entities to the first network element via the second network element, such that when receiving data, the first network element delivers data received by the HARQ entity to an upper layer via the DRB corresponding to the HARQ entity; and the third network element sends the configuration information between DRBs and HARQ entities to the second network element via the first network element, such that when sending data, the second network element submits data from the DRB to the HARQ entity for sending.

In some optional embodiments, the third network element configures one HARQ entity for one DRB on the basis of the configuration information between DRBs and HARQ entities may be: the HARQ entity uses a lifecycle same as the DRB. For example, when the DRB is established, the HARQ entity is generated correspondingly, and when the DRB is removed, the HARQ entity is also deleted correspondingly.

In some optional embodiments, the third network element configures one HARQ entity for one DRB on the basis of the configuration information between DRBs and HARQ entities may be: configuring one HARQ entity for one DRB may be in data transmission involving a plurality of DRBs, the HARQ entity delivers data to an upper layer only via the DRBs.

In some optional embodiments, the third network element configures one HARQ entity for one DRB on the basis of the configuration information between DRBs and HARQ entities may be: configuring one HARQ entity for one DRB may be in data transmission involving are a plurality of DRBs, the HARQ entity is only bound to, corresponds to or is associated with the DRBs.

In some optional embodiments, the third network element configures one HARQ entity for one DRB on the basis of the configuration information between DRBs and HARQ entities may be: configuration of the DRB includes configuration of the HARQ entity. For example, configuration parameters of the DRB include parameter configuration of the HARQ entity.

In some optional embodiments, the third network element configures one HARQ entity for one DRB on the basis of the configuration information between DRBs and HARQ entities may be: configuration of the DRB includes an HARQ entity identity of the HARQ entity. For example, a configuration message configured for the DRB includes an identity of the HARQ entity (HARQ entity ID).

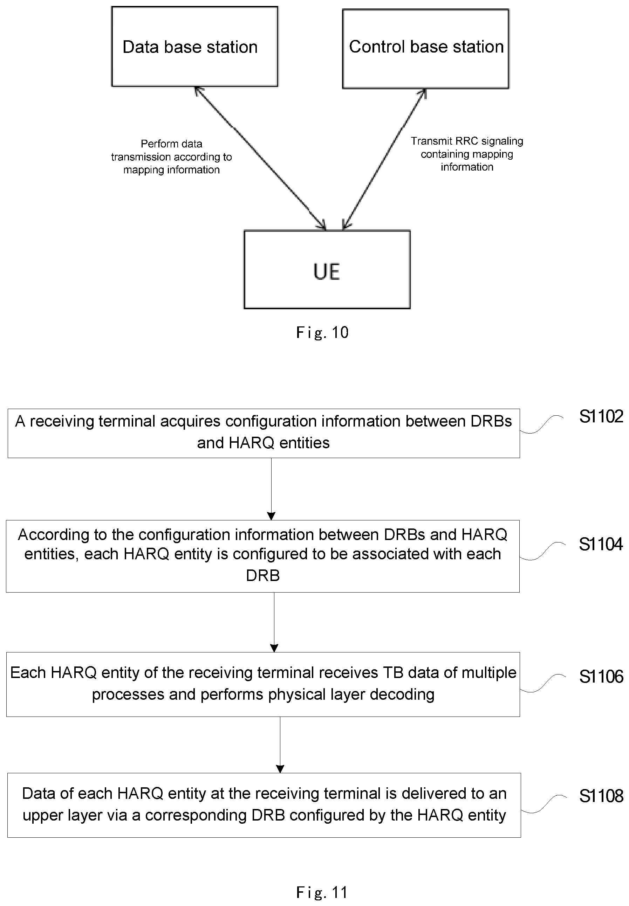

In the described steps, in scenarios where control signaling is separated from data transmission, there are a base station that only sends control signaling and a base station that only performs data transmission. The base station that only sends control signaling uses a low-frequency carrier to achieve the purpose of wide coverage of control signaling, and the base station that only performs data transmission can use a high-frequency carrier to achieve short-distance high-speed data transmission. Fig. 10 is a schematic diagram II of an RRC message transmission method according to embodiments of the present disclosure. As shown in Fig. 10, the base station that only sends control signaling is responsible for transmitting RRC messages, and the configuration information between DRBs and HARQ entities of the base station that only performs data transmission is placed in the RRC messages of the base station that only sends control signaling, for transmission. The base station that only performs data transmission uses the configuration information in the RRC information sent by the base station that only sends control signaling to send downlink data or receive uplink data. Optionally, the base station that only sends control signaling and the base station that only performs data transmission may transmit the configuration information via an inter-base station interface (for example, X2 interface, Xn interface). The UE receives the RRC information sent by the base station that only sends control signaling, and performs, according to the configuration information, downlink data reception or uplink data transmission with the base station that only performs data transmission. In addition, in a networking scenario of a macro base station and a micro base station, the macro base station has a large coverage. The macro base station can provide control signaling transmission for the micro base station, for example, the macro base station not only provides RRC control signaling and data transmission for a UE connected to the macro base station, but also provides RRC control signaling for a UE connected to the micro base station; and by sending an RRC message containing configuration information between DRBs and HARQ entities corresponding to a micro base station-micro base station served UE, the macro base station provides an indication for configuring an HARQ entity for a DRB to the micro base station and the UE connected to the micro base station.

In the described steps, the third network element sends the configuration information between DRBs and HARQ entities to the first network element via the second network element, includes but is not limited to: when the first network element is a UE, the second network element is a DU (which can directly interact with the UE for control signaling messages and data transmission messages), and the third network element is a CU, since the CU and the UE do not directly interact with each other, an RRC message generated by the CU is sent to the UE via the DU. The CU interacts with the DU via an F1 interface. Physical layers, MAC and RLC layers which have high real-time requirements are processed in the DU, and PDCP and RRC layers which have low real-time requirements are processed in the CU. When the CU and the DU are not integrally deployed, the DU first receives information from the UE, and then sends the information to the CU via the F1 interface. When downlink data arrives, the CU first processes the downlink data, then delivers the downlink data to the DU via the F1 interface, and then delivers the downlink data to the UE via an air interface. In the present disclosure, the CU sends an RRC message containing the configuration information between DRBs and HARQ entities to the DU; the DU transfers the configuration information to the UE; and the DU and the UE perform configuration of uplink and downlink data transmission according to the configuration relationship. For downlink transmission, according to the configuration information between DRBs and HARQ entities in the RRC message of the CU, the DU places data on one DRB onto an HARQ entity configured by the DRB, for sending. For uplink transmission, according to the configuration information between DRBs and HARQ entities in the RRC message of the CU, the DU places data received on one HARQ entity into a configured corresponding DRB for being delivered to an upper layer.

In some optional embodiments, the third network element sends the configuration information between DRBs and HARQ entities includes: the third network element sends the configuration information between DRBs and HARQ entities via a fifth configuration message, wherein the fifth configuration message includes at least one of: an RRC message and a DRB configuration message.

In some optional embodiments, the RRC message includes at least one of: an RRC connection setup message, an RRC configuration message, an RRC reconfiguration message, an RRC transfer message, an RRC request message, and an RRC request response message.

In some optional embodiments, the first network element includes at least one of: an RAN, a UE, a CU, a DU, a relay node and an IAB node.

In some optional embodiments, the second network element includes at least one of: an RAN, a UE, a CU, a DU, a relay node and an IAB node.

In some optional embodiments, the third network element includes at least one of: an RAN, a UE, a CU, a DU, a relay node and an IAB node.

Hereinafter, the method of the present solution will be described as a whole in combination with specific embodiments.

The present disclosure provides a data transmission configuration process in which DRBs are bound to HARQ entities, wherein the DRBs being bound to the HARQ entities is one-to-one configuration between the DRBs and the HARQ entities or configuring one HARQ entity for each DRB.

Fig. 11 is a flowchart IV of a data transmission method according to embodiments of the present disclosure. Processing steps of a data receiving terminal are as follows:
step S1102: the receiving terminal acquires configuration information between DRBs and HARQ entities, and the acquisition method is, for example, receiving control signaling (the control signaling is for example, an RRC message) containing the configuration information, wherein the control signaling contains a fixed configuration indication of the DRB for the HARQ entity;
step S1104: according to the configuration information between DRBs and HARQ entities, each HARQ entity is configured to be associated with each DRB;
step S1106: each HARQ entity of the receiving terminal receives TB data of multiple processes and performs physical layer decoding;
and step S1108: data of each HARQ entity at the receiving terminal is delivered to an upper layer via a corresponding DRB configured by the HARQ entity.

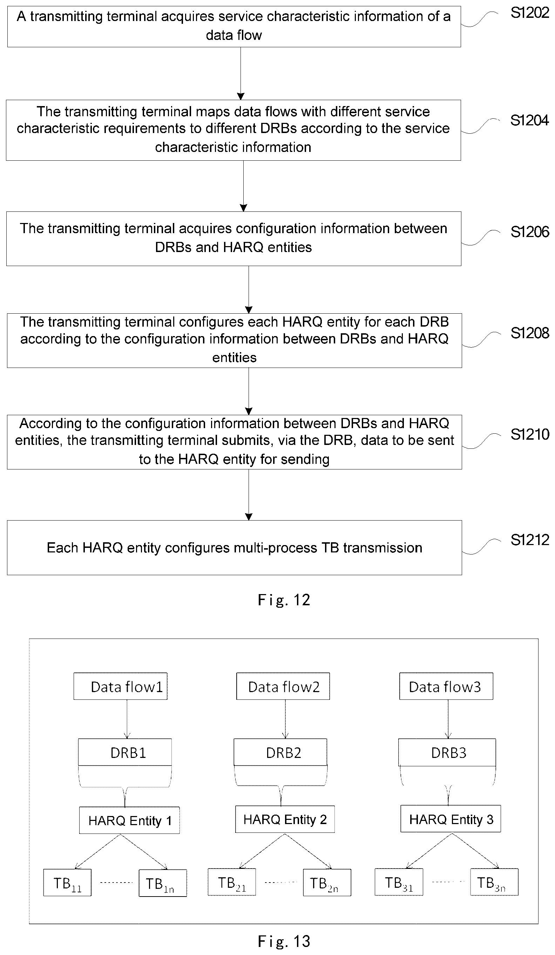

Fig. 12 is a flowchart V of a data transmission method according to embodiments of the present disclosure; and Fig. 13 is a schematic diagram of a data configuration method according to embodiments of the present disclosure. Processing steps of a transmitting terminal are as follows:
step S1202: the transmitting terminal acquires service characteristic information of a data flow;
step S1204: the transmitting terminal maps data flows with different service characteristic requirements to different DRBs according to the service characteristic information;
step S1206: the transmitting terminal acquires configuration information between DRBs and HARQ entities;
step S1208: the transmitting terminal configures each HARQ entity for each DRB according to the configuration information between DRBs and HARQ entities;
step S1210: according to the configuration information between DRBs and HARQ entities, the transmitting terminal submits, via the DRB, data to be sent to the HARQ entity for sending;
and step S1212: each HARQ entity configures multi-process TB transmission.

In the described steps, after acquiring the configuration information between DRBs and HARQ entities, the transmitting terminal may also send the configuration information to a receiving terminal. The existing mechanism cannot meet the requirements of customized transmission in lower layer (such as a physical layer), and lacks flexibility for customized assurance of services. The refined differentiation, independent configuration and personalized resource configuration for data of varying service characteristic requirements in the described steps flexibly meets the transmission requirements of different services in lower layer, and significantly enhances both service transmission capabilities and service performance experience.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. On the basis of such understanding, the portion of the technical solution of the present disclosure that contributes in essence or to the related art may be embodied in the form of a software product stored in a storage medium (such as an ROM/RAM, a magnetic disk and an optical disc); and the storage medium includes several instructions to cause a terminal device (which may be a mobile phone, a computer, a server or a network device, etc.) to perform the methods according to the various embodiments of the present disclosure.

The present embodiment further provides a data transmission apparatus, wherein the apparatus is configured to implement the described embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

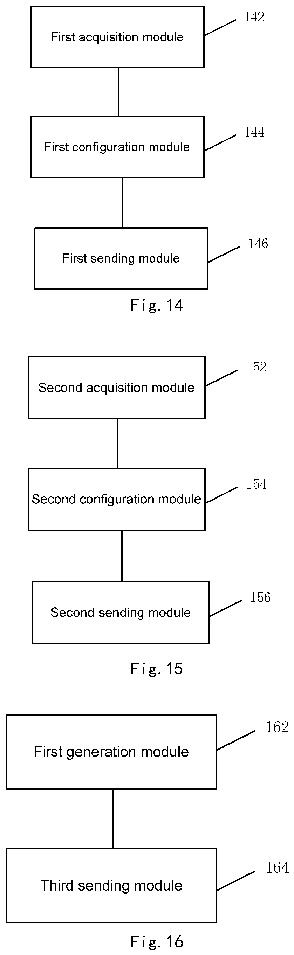

Fig. 14 is a structural block diagram I of a data transmission apparatus according to embodiments of the present disclosure. As shown in Fig. 14, the apparatus is applied to a first network element and includes: a first acquisition module 142, configured to acquire configuration information between data radio bearers (DRBs) and hybrid automatic repeat request (HARQ) entities, wherein the configuration information between DRBs and HARQ entities is used for configuring one HARQ entity corresponding to one DRB; a first configuration module 144, configured to configure the HARQ entity to the DRB on the basis of the configuration information between DRBs and HARQ entities; and a first sending module 146, configured to deliver data received by the HARQ entity to an upper layer via the DRB corresponding to the HARQ entity.

In some optional embodiments, the configuration information between DRBs and HARQ entities includes at least one of: a DRB identity of the DRB, an HARQ entity identity of the HARQ entity, and a group identity configured for the DRB and the HARQ entity.

In some optional embodiments, the first configuration module 144 includes at least one of: a first period unit, configured to enable the HARQ entity to use the same lifecycle as the DRB; a first delivery unit, configured such that in data transmission where there are a plurality of DRBs, the HARQ entity delivers data to an upper layer only via the DRBs; a first binding unit, configured such that in data transmission where there are a plurality of DRBs, the HARQ entity is only bound to the DRBs; a first corresponding unit, configured such that in data transmission where there are a plurality of DRBs, the HARQ entity only corresponds to the DRBs; a first association unit, configured such that in data transmission where there are a plurality of DRBs, the HARQ entity is only associated with the DRBs; a first configuration unit, configured such that configuration of the DRB includes configuration of the HARQ entity; and a second configuration unit, configured such that configuration of the DRB includes an HARQ entity identity of the HARQ entity.

In some optional embodiments, the first acquisition module 142 includes at least one of: a first generation unit, configured to generate the configuration information between DRBs and HARQ entities; a first reception unit, configured to receive, by the first network element, a first configuration message including the configuration information between DRBs and HARQ entities; and a first sending unit, configured to first send, by the first network element, a first request message, and then receive a first configuration message including the configuration information between DRBs and HARQ entities, wherein the first request message is used for requesting a second network element to send the first configuration message including the configuration information between DRBs and HARQ entities, and the second network element is a network element which sends data to the first network element according to the configuration information between DRBs and HARQ entities.

In some optional embodiments, the apparatus further includes: a fourth sending module, configured to send, after acquiring the configuration information between DRBs and HARQ entities, to the second network element, a second configuration message including the configuration information between DRBs and HARQ entities, such that the second network element sends data to the first network element according to the configuration information between DRBs and HARQ entities, wherein the second configuration message includes at least one of: a radio resource control (RRC) message, and a radio bearer configuration message.

In some optional embodiments, the first reception unit includes at least one of: a first reception subunit, configured to receive the first configuration message from a second network element, wherein the second network element is a network element which sends data to the first network element according to the configuration information between DRBs and HARQ entities; a second reception subunit, configured to receive the first configuration message from a third network element, wherein the third network element is a network element which does not directly send data to the first network element according to the configuration information between DRBs and HARQ entities; and a third reception subunit, configured to receive the first configuration message from the third network element via the second network element, wherein the third network element is a network element which does not directly send data to the first network element according to the configuration information between DRBs and HARQ entities, and the second network element is a network element which directly sends data to the first network element according to the configuration information between DRBs and HARQ entities.

In some optional embodiments, the first configuration message includes at least one of: an RRC message and a radio bearer configuration message.

In some optional embodiments, the RRC message includes at least one of: an RRC connection message, an RRC setup message, an RRC configuration message, an RRC reconfiguration message, an RRC transfer message, an RRC recovery message, and an RRC request response message.

In some optional embodiments, the first request message includes at least one of: an RRC request message and a radio bearer configuration request message.

In some optional embodiments, the first network element includes at least one of: an RAN, a UE, a CU, a DU, a relay node and an IAB node.

In some optional embodiments, the second network element includes at least one of: an RAN, a UE, a CU, a DU, a relay node and an IAB node.

In some optional embodiments, the third network element includes at least one of: an RAN, a UE, a CU, a DU, a relay node and an IAB node.

Fig. 15 is a structural block diagram II of a data transmission apparatus according to embodiments of the present disclosure. As shown in Fig. 15, the apparatus is applied to a second network element and includes: a second acquisition module 152, configured to acquire configuration information between data radio bearers (DRBs) and hybrid automatic repeat request (HARQ) entities, wherein the configuration information between DRBs and HARQ entities is used for configuring one HARQ entity for one DRB; a second configuration module 154, configured to configure the HARQ entity for the DRB on the basis of the configuration information between DRBs and HARQ entities; and a second sending module 156, configured to submit a data flow via the DRB to the HARQ entity corresponding to the DRB for sending.

In some optional embodiments, the configuration information between DRBs and HARQ entities includes at least one of: a DRB identity of the DRB, an HARQ entity identity of the HARQ entity, and a group identity configured for the DRB and the HARQ entity.

In some optional embodiments, the second configuration module 154 includes at least one of: a second period unit, configured to enable the HARQ entity to use the same lifecycle as the DRB; a second delivery unit, configured such that in data transmission where there are a plurality of DRBs, the HARQ entity delivers data to an upper layer only via the DRBs; a second binding unit, configured such that in data transmission where there are a plurality of DRBs, the HARQ entity is only bound to the DRBs; a second corresponding unit, configured such that in data transmission where there are a plurality of DRBs, the HARQ entity only corresponds to the DRBs; a second association unit, configured such that in data transmission where there are a plurality of DRBs, the HARQ entity is only associated with the DRBs; a third configuration unit, configured such that configuration of the DRB includes configuration of the HARQ entity; and a fourth configuration unit, configured such that configuration of the DRB includes an HARQ entity identity of the HARQ entity.

In some optional embodiments, the second acquisition module 152 includes at least one of: a second generation unit, configured to generate the configuration information between DRBs and HARQ entities; a second reception unit, configured to receive a third configuration message including the configuration information between DRBs and HARQ entities; and a second sending unit, configured to first send a second request message, and then receive a third configuration message including the configuration information between DRBs and HARQ entities, wherein the second request message is used for requesting a first network element to send the third configuration message including the configuration information between DRBs and HARQ entities.

In some optional embodiments, the second reception unit includes at least one of: a fourth reception subunit, configured to receive the third configuration message from the first network element, wherein the first network element is a network element which receives data from the second network element according to the configuration information between DRBs and HARQ entities; a fifth reception subunit, configured to receive the third configuration message from a third network element, wherein the third network element is a network element which does not directly receive data from the second network element according to the configuration information between DRBs and HARQ entities; and a sixth reception subunit, configured to receive the third configuration message from the third network element via the first network element, wherein the third network element is a network element which does not directly send data to the first network element according to the configuration information between DRBs and HARQ entities, and the first network element is a network element which directly sends data to the second network element according to the configuration information between DRBs and HARQ entities.

In some optional embodiments, the apparatus further includes: a fifth sending module, configured to send a fourth configuration message including the configuration information between DRBs and HARQ entities to the first network element, such that the first network element receives data according to the configuration information between DRBs and HARQ entities, wherein the first network element is a network element which receives data from the second network element according to the configuration information between DRBs and HARQ entities.

In some optional embodiments, the apparatus further includes: a reception module, configured to, before sending the fourth configuration message including the configuration information between DRBs and HARQ entities to the first network element, receive a third request message sent by the first network element, wherein the third request message is used for requesting the second network element to send the fourth configuration message including the configuration information between DRBs and HARQ entities.

In some optional embodiments, the third configuration message includes at least one of: an RRC message and a radio bearer configuration message.

In some optional embodiments, the fourth configuration message includes at least one of: an RRC message and a radio bearer configuration message.

In some optional embodiments, the RRC message includes at least one of: an RRC connection message, an RRC setup message, an RRC configuration message, an RRC reconfiguration message, an RRC transfer message, and an RRC request response message.

In some optional embodiments, the second request message includes at least one of: an RRC request message and a radio bearer configuration request message.

In some optional embodiments, the third request message includes at least one of: an RRC request message and a radio bearer configuration request message.

In some optional embodiments, the second sending module 156 includes: a third sending unit, configured to send the data flow according to service characteristics of the data flow that needs to be sent, wherein data flows with different service characteristics are submitted via different DRBs to corresponding HARQ entities configured by the DRBs, for sending.

In some optional embodiments, the service characteristics include at least one of: an in-order packet transmission service indication, an out-of-order packet transmission service indication, a high-reliability transmission service indication, a low-reliability transmission service indication, a low-latency transmission service indication, a non-low-latency transmission service indication, a service type indication, a service ID, and a service name identity.

In some optional embodiments, the first network element includes at least one of: an RAN, a UE, a CU, a DU, a relay node and an IAB node.

In some optional embodiments, the second network element includes at least one of: an RAN, a UE, a CU, a DU, a relay node and an IAB node.

In some optional embodiments, the third network element includes at least one of: an RAN, a UE, a CU, a DU, a relay node and an IAB node.

Fig. 16 is a structural block diagram III of a data transmission apparatus according to embodiments of the present disclosure. As shown in Fig. 16, the apparatus is applied to a third network element and includes: a first generation module 162, configured to generate configuration information between data radio bearers (DRBs) and hybrid automatic repeat request (HARQ) entities, wherein the configuration information between DRBs and HARQ entities is used for configuring one HARQ entity corresponding to one DRB; and a third sending module 164, configured to send the configuration information between DRBs and HARQ entities.

In some optional embodiments, the configuration information between DRBs and HARQ entities includes at least one of: a DRB identity of the DRB, an HARQ entity identity of the HARQ entity, and a group identity configured for the DRB and the HARQ entity.

In some optional embodiments, the third sending module 164 includes at least one of: a fourth sending unit, configured to directly send the configuration information between DRBs and HARQ entities to a first network element, such that when receiving data, the first network element delivers data received by the HARQ entity to an upper layer via the DRB corresponding to the HARQ entity; a fifth sending unit, configured to directly send the configuration information between DRBs and HARQ entities to a second network element, such that when sending data, the second network element submits data from the DRB to the HARQ entity for sending; a sixth sending unit, configured to send the configuration information between DRBs and HARQ entities to the first network element via a second network element, such that when receiving data, the first network element delivers data received by the HARQ entity to an upper layer via the DRB corresponding to the HARQ entity; and a seventh sending unit, configured to send the configuration information between DRBs and HARQ entities to the second network element via the first network element, such that when sending data, the second network element submits data from the DRB to the HARQ entity for sending.

In some optional embodiments, the third sending module 164 includes: an eighth sending element, configured to send the configuration information between DRBs and HARQ entities via a fifth configuration message.

In some optional embodiments, the fifth configuration message includes at least one of: an RRC message and a radio bearer configuration message.

In some optional embodiments, the RRC message includes at least one of: an RRC connection setup message, an RRC configuration message, an RRC reconfiguration message, an RRC transfer message, and an RRC request response message.

In some optional embodiments, the first network element includes at least one of: an RAN, a UE, a CU, a DU, a relay node and an IAB node.

In some optional embodiments, the second network element includes at least one of: an RAN, a UE, a CU, a DU, a relay node and an IAB node.

In some optional embodiments, the third network element includes at least one of: an RAN, a UE, a CU, a DU, a relay node and an IAB node.

It should be noted that the described modules may be implemented by software or hardware. The latter may be implemented in the following manner, but is not limited thereto: all the described modules are located in the same processor; or all the modules above are located in different processors in any arbitrary combination manner.

Embodiments of the present disclosure further provide a computer-readable storage medium, the computer-readable storage medium storing a computer program; wherein the computer program is configured to execute, when running, the steps in any one of the described method embodiments.

In some exemplary embodiments, the computer-readable storage medium above may include, but is not limited to: various media that can store a computer program, such as a USB flash drive, a Read-Only Memory (ROM for short), a Random Access Memory (RAM for short), a removable hard disk, a magnetic disk, or an optical disc.

Embodiments of the present disclosure further provide an electronic apparatus, including a memory and a processor; wherein the memory stores a computer program, and the processor is configured to run the computer program to execute the steps in any one of the described method embodiments.

In some exemplary embodiments, the electronic apparatus can further include a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

It is apparent that a person skilled in the art shall understand that all of the modules or steps in the present disclosure may be implemented by using a general computing apparatus, may be centralized on a single computing apparatus or may be distributed on a network composed of multiple computing apparatuses. The modules or steps may be implemented by using executable program codes of the computing apparatus, and thus, the program codes may be stored in a storage apparatus and executed by the computing apparatus, and in some cases, the shown or described steps may be executed in a sequence different from that shown herein, or the modules or steps are manufactured into integrated circuit modules, or multiple modules or steps therein are manufactured into a single integrated circuit module for implementation. Thus, the present disclosure is not limited to any specific hardware and software combinations.

The content above merely relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A data transmission method, applied to a first network element, the method comprising:
acquiring configuration information between data radio bearers (DRBs) and hybrid automatic repeat request (HARQ) entities, wherein the configuration information between DRBs and HARQ entities is used for configuring one HARQ entity for one DRB;
configuring the HARQ entity to the DRB on the basis of the configuration information between DRBs and HARQ entities; and
delivering data received by the HARQ entity to an upper layer via the DRB corresponding to the HARQ entity.

2. The method according to claim 1, wherein the configuration information between DRBs and HARQ entities comprises at least one of: a DRB identity of the DRB, an HARQ entity identity of the HARQ entity, and a group identity configured for the DRB and the HARQ entity.

3. The method according to claim 1 or 2, wherein configuring the HARQ entity to the DRB comprises at least one of:
the HARQ entity uses a lifecycle same as the DRB;
in data transmission where there are a plurality of DRBs, the HARQ entity delivers data to an upper layer only via the DRB;
in data transmission where there are a plurality of DRBs, the HARQ entity is only bound to the DRB;
in data transmission where there are a plurality of DRBs, the HARQ entity only corresponds to the DRB;
in data transmission where there are a plurality of DRBs, the HARQ entity is only associated with the DRB;
configuration of the DRB comprises configuration of the HARQ entity; and
configuration of the DRB comprises an HARQ entity identity of the HARQ entity.

4. The method according to claim 1, wherein acquiring, by the first network element, configuration information between DRBs and HARQ entities comprises at least one of:
generating, by the first network element, configuration information between DRBs and HARQ entities;
receiving, by the first network element, a first configuration message comprising the configuration information between DRBs and HARQ entities; and
sending, by the first network element, a first request message, and then receiving a first configuration message comprising the configuration information between DRBs and HARQ entities, wherein the first request message is used for requesting a second network element to send the first configuration message comprising the configuration information between DRBs and HARQ entities, and the second network element is a network element which sends data to the first network element according to the configuration information between DRBs and HARQ entities.

5. The method according to any one of claims 1 to 4, wherein after acquiring, by the first network element, configuration information between DRBs and HARQ entities, the method further comprises: sending, to a second network element, a second configuration message comprising the configuration information between DRBs and HARQ entities, such that the second network element sends data to the first network element according to the configuration information between DRBs and HARQ entities, wherein the second configuration message comprises at least one of: a radio resource control (RRC) message, a radio bearer configuration message.

6. The method according to claim 4, wherein the method of receiving, by the first network element, a first configuration message comprising the configuration information between DRBs and HARQ entities comprises at least one of:
receiving, by the first network element, the first configuration message from the second network element, wherein the second network element is a network element which sends data to the first network element according to the configuration information between DRBs and HARQ entities;
receiving, by the first network element, the first configuration message from a third network element, wherein the third network element is a network element which does not directly send data to the first network element according to the configuration information between DRBs and HARQ entities; and
receiving, by the first network element, the first configuration message from the third network element via the second network element, wherein the third network element is a network element which does not directly send data to the first network element according to the configuration information between DRBs and HARQ entities, and the second network element is a network element which directly sends data to the first network element according to the configuration information between DRBs and HARQ entities.

7. The method according to any one of claims 4 to 6, wherein the first configuration message comprises at least one of:
a radio resource control (RRC) message and a radio bearer configuration message.

8. The method according to claim 4, wherein the first request message comprises at least one of:
an RRC request message and a radio bearer configuration request message.

9. A data transmission method, applied to a second network element, the method comprising:
acquiring configuration information between data radio bearers (DRBs) and hybrid automatic repeat request (HARQ) entities, wherein the configuration information between DRBs and HARQ entities is used for configuring one HARQ entity for one DRB;
configuring the HARQ entity for the DRB on the basis of the configuration information between DRBs and HARQ entities; and
submitting a data flow via the DRB to the HARQ entity corresponding to the DRB for sending.

10. The method according to claim 9, wherein the configuration information between DRBs and HARQ entities comprises at least one of: a DRB identity of the DRB, an HARQ entity identity of the HARQ entity, and a group identity configured for the DRB and the HARQ entity.

11. The method according to claim 9 or 10, wherein configuring the HARQ entity for the DRB comprises at least one of:
the HARQ entity uses a lifecycle same as the DRB;
in data transmission where there are a plurality of DRBs, the HARQ entity delivers data to an upper layer only via the DRB;
in data transmission where there are a plurality of DRBs, the HARQ entity is only bound to the DRB;
in data transmission where there are a plurality of DRBs, the HARQ entity only corresponds to the DRB;
in data transmission where there are a plurality of DRBs, the HARQ entity is only associated with the DRB;
configuration of the DRB comprises configuration of the HARQ entity; and
configuration of the DRB comprises an HARQ entity identity of the HARQ entity.

12. The method according to any one of claims 9 to 11, wherein acquiring, by the second network element, configuration information between DRBs and HARQ entities comprises at least one of:
generating, by the second network element, configuration information between DRBs and HARQ entities;
receiving, by the second network element, a third configuration message comprising the configuration information between DRBs and HARQ entities; and
first sending, by the second network element, a second request message, and then receiving a third configuration message comprising the configuration information between DRBs and HARQ entities, wherein the second request message is used for requesting a first network element to send the third configuration message comprising the configuration information between DRBs and HARQ entities.

13. The method according to claim 12, wherein receiving, by the second network element, a third configuration message comprising the configuration information between DRBs and HARQ entities comprises at least one of:
receiving, by the second network element, the third configuration message from the first network element, wherein the first network element is a network element which receives data from the second network element according to the configuration information between DRBs and HARQ entities;
receiving, by the second network element, the third configuration message from the third network element, wherein the third network element is a network element which does not directly receive data from the second network element according to the configuration information between DRBs and HARQ entities; and
receiving, by the second network element, the third configuration message from the third network element via the first network element, wherein the third network element is a network element which does not directly send data to the first network element according to the configuration information between DRBs and HARQ entities, and the first network element is a network element which directly sends data to the second network element according to the configuration information between DRBs and HARQ entities.

14. The method according to any one of claims 9 to 13, wherein the method further comprises:
sending, by the second network element, a fourth configuration message comprising the configuration information between DRBs and HARQ entities to the first network element, such that the first network element receives data according to the configuration information between DRBs and HARQ entities, wherein the first network element is a network element which receives data from the second network element according to the configuration information between DRBs and HARQ entities.

15. The method according to claim 14, before sending, by the second network element, the fourth configuration message comprising the configuration information between DRBs and HARQ entities to the first network element, the method further comprises:
receiving, by the second network element, a third request message sent by the first network element, wherein the third request message is used for requesting the second network element to send the fourth configuration message comprising the configuration information between DRBs and HARQ entities.

16. The method according to any one of claims 12, 13 and 15, wherein the third configuration message comprises at least one of: a radio resource control (RRC) message and a radio bearer configuration message.

17. The method according to claim 14 or 15, wherein the fourth configuration message comprises at least one of: a radio resource control (RRC) message and a radio bearer configuration message.

18. The method according to claim 12, wherein the second request message comprises at least one of:
an RRC request message and a radio bearer configuration request message.

19. The method according to claim 15, wherein the third request message comprises at least one of:
an RRC request message and a radio bearer configuration request message.

20. The method according to claim 9, wherein submitting a data flow via the DRB to the HARQ entity corresponding to the DRB for sending, comprises:
sending, by the second network element, the data flow according to service characteristics of the data flow that needs to be sent, wherein data flows with different service characteristics are submitted via different DRBs to corresponding HARQ entities configured by the DRBs, for sending.

21. The method according to claim 20, wherein the service characteristics comprise at least one of:
an in-order packet transmission service indication, an out-of-order packet transmission service indication, a high-reliability transmission service indication, a low-reliability transmission service indication, a low-latency transmission service indication, a non-low-latency transmission service indication, a service type indication, a service identity, and a service name identity.

22. A data transmission method, applied to a third network element, the method comprising:
generating configuration information between data radio bearers (DRBs) and hybrid automatic repeat request (HARQ) entities, wherein the configuration information between DRBs and HARQ entities is used for configuring one HARQ entity corresponding to one DRB; and
sending the configuration information between DRBs and HARQ entities.

23. The method according to claim 22, wherein the configuration information between DRBs and HARQ entities comprises at least one of: a DRB identity of the DRB, an HARQ entity identity of the HARQ entity, and a group identity configured for the DRB and the HARQ entity.

24. The method according to claim 22, wherein sending, by the third network element, the configuration information between DRBs and HARQ entities comprises at least one of:
directly sending, by the third network element, the configuration information between DRBs and HARQ entities to a first network element, such that when receiving data, the first network element delivers data received by the HARQ entity to an upper layer via the DRB corresponding to the HARQ entity;
directly sending, by the third network element, the configuration information between DRBs and HARQ entities to a second network element, such that when sending data, the second network element submits data from the DRB to the HARQ entity for sending;
sending, by the third network element, the configuration information between DRBs and HARQ entities to the first network element via the second network element, such that when receiving data, the first network element delivers data received by the HARQ entity to an upper layer via the DRB corresponding to the HARQ entity; and
sending, by the third network element, the configuration information between DRBs and HARQ entities to the second network element via the first network element, such that when sending data, the second network element submits data from the DRB to the HARQ entity for sending.

25. The method according to any one of claims 22 to 24, wherein sending, by the third network element, the configuration information between DRBs and HARQ entities comprises:
sending, by the third network element, the configuration information between DRBs and HARQ entities via a fifth configuration message.

26. The method according to claim 25, wherein the fifth configuration message comprises at least one of: a radio resource control (RRC) message and a radio bearer configuration message.

27. A computer-readable storage medium, with computer program stored therein, wherein when executed by a processor, the computer program implements steps of the method according to any one of claims 1 to 8, or implements steps of the method according to any one of claims 9 to 21, or implements steps of the method according to any one of claims 22 to 26.

28. An electronic apparatus, comprising a memory, a processor, and a computer program which is stored on the memory and can be run on the processor, wherein when executing the computer program, the processor implements steps of the method according to any one of claims 1 to 8, or implements steps of the method according to any one of claims 9 to 21, or implements steps of the method according to any one of claims 22 to 26.
